# EUROPEAN PATENT APPLICATION

(11) **EP 4 478 195 A1**
(43) Date of publication of application: **18.12.2024**
(21) Application number: 23777993.9
(22) Date of filing: 23.03.2023
(51) Int. Cl.: G06F 11/14

(54) **BACKGROUND APPLICATION RECOVERY METHOD, APPARATUS, ELECTRONIC DEVICE AND READABLE STORAGE MEDIUM**

(30) Priority: 31.03.2022 CN 202210353006
(71) Applicant: Huawei Technologies Co., Ltd., Shenzhen, Guangdong 518129 (CN)
(72) Inventor: LI, Zhuolong, Shenzhen, Guangdong 518129 (CN); LU, Yu, Shenzhen, Guangdong 518129 (CN); WANG, Baohui, Shenzhen, Guangdong 518129 (CN); QIN, Chao, Shenzhen, Guangdong 518129 (CN)
(74) Representative: Gill Jennings & Every LLP
(86) International application number: PCT/CN2023/083372
(87) International publication number: WO 2023/185623

(57) **Abstract**

This application is applicable to the terminal field, and in particular, to a background application restoration method and apparatus, an electronic device, and a readable storage medium. The background application restoration method includes: in response to a restore operation from a user, obtaining a first identification tag of the user; obtaining, from a first storage space based on the first identification tag of the user, background applications deleted by the user; and determining at least one background application from the background applications deleted by the user and restoring the at least one background application in response to the operation from the user. In this way, the background application deleted by the user is restored, so that when accidentally deleting a background application, the user can conveniently and quickly restore the accidentally deleted background application by using the operation, thereby resolving a problem that the background application is accidentally deleted.

## Description

This application claims priority to Chinese Patent Application No. 202210353006.1, filed with the China National Intellectual Property Administration on March 31, 2022 and entitled "BACKGROUND APPLICATION RESTORATION METHOD AND APPARATUS, ELECTRONIC DEVICE, AND READABLE STORAGE MEDIUM", which is incorporated herein by reference in its entirety.

### TECHNICAL FIELD

This application relates to the terminal field, and in particular, to a background application restoration method and apparatus, an electronic device, and a readable storage medium.

### BACKGROUND

Nowadays, intelligent devices such as smartphones, tablet computers, and intelligent terminals are ubiquitous in people's life. These intelligent devices usually provide services for users by using applications (Applications, APPs). One intelligent device may run a plurality of applications at the same time. An application displayed on an interface is a foreground application, and others are background applications. Running background applications occupy system resources of the intelligent device. Therefore, a user may delete the background applications.

However, when deleting a background application, the user may accidentally delete a background application that does not need to be deleted. Currently, accidental deletion can be prevented only by locking the background application in advance.

However, an existing manner of preventing accidental deletion is inconvenient to operate, and cannot effectively prevent accidental deletion.

### SUMMARY

Embodiments of this application provide a background application restoration method and apparatus, an electronic device, and a readable storage medium, to resolve a problem in the conventional technology that a distance calculated according to a one-way ranging solution is inaccurate and has a large error.

According to a first aspect, an embodiment of this application provides a background application restoration method, applied to an electronic device and including: in response to a restore operation from a user, obtaining a first identification tag of the user; obtaining, from a first storage space based on the first identification tag of the user, background applications deleted by the user; and determining at least one background application from the background applications deleted by the user and restoring the at least one background application in response to the operation from the user.

In some implementations, the electronic device may be a device that can perform an operation on the background application, for example, a mobile phone, a tablet computer, an augmented reality (augmented reality, AR)/virtual reality (virtual reality, VR) device, a large-screen device, a notebook computer, a netbook, or a personal digital assistant (personal digital assistant, PDA). A specific type of the electronic device is not limited in embodiments of this application.

In the first aspect, the first identification tag of the user is obtained in response to the restore operation from the user. Then, the background applications deleted by the user are obtained based on the first identification tag of the user. In addition, the at least one background application is determined from the displayed background applications and restored in response to the operation from the user. In this way, the background application deleted by the user is restored, so that when accidentally deleting a background application, the user can conveniently and quickly restore the accidentally deleted background application by using the operation, thereby resolving a problem that the background application is accidentally deleted.

In some implementations, the method further includes: in response to a delete operation from the user, deleting the at least one background application, and storing the deleted background application in the first storage space.

In some implementations, the deleting the at least one background application, and storing the deleted background application in the first storage space includes: removing the deleted background application from a background application list, where the background application list includes at least one running background application; and binding the deleted background application, restoration information of the deleted background application, and the first identification tag of the user, and storing the bound deleted background application, restoration information of the deleted background application, and first identification tag of the user in the first storage space.

In some implementations, the method further includes: after storage duration of the deleted background application in the first storage space reaches preset duration, clearing the deleted background application from the first storage space.

In some implementations, the preset duration is determined based on a quantity of restoration times that the user restores the deleted background application and a restoration time interval.

In some implementations, the obtaining, from a first storage space based on the first identification tag of the user, background applications deleted by the user includes: obtaining, from the first storage space based on the first identification tag of the user, the deleted background application including the first identification tag of the user, and displaying an application identifier of each deleted background application.

In some implementations, the determining at least one background application from the background applications and restoring the at least one background application in response to the operation from the user includes: obtaining the restoration information of the deleted background application from the first storage space, where the deleted background application is determined based on the operation from the user; adding the deleted background application to the background application list based on the obtained restoration information of the deleted background application; and removing the deleted background application from the first storage space.

According to a second aspect, an embodiment of this application provides a background application restoration apparatus, used in an electronic device and including: an obtaining module, configured to: in response to a restore operation from a user, obtain a first identification tag of the user, where the obtaining module is further configured to: obtain, based on the first identification tag of the user, background applications deleted by the user; and display the background applications; and a restoration module, configured to: select at least one background application from the displayed background applications and restore the at least one background application in response to the operation from the user.

In some implementations, the apparatus further includes a deletion module, configured to: in response to a delete operation from the user, delete the at least one background application, and store the deleted background application in a first storage space.

In some implementations, the deletion module is specifically configured to: remove the deleted background application from a background application list, where the background application list includes at least one running background application; and bind the deleted background application, restoration information of the deleted background application, and the first identification tag of the user, and store the bound deleted background application, restoration information of the deleted background application, and first identification tag of the user in the first storage space.

In some implementations, the deletion module is further configured to: after storage duration of the deleted background application in the first storage space reaches preset duration, clear the deleted background application from the first storage space.

In some implementations, the preset duration is determined based on a quantity of restoration times that the user restores the deleted background application and a restoration time interval.

In some implementations, the obtaining module is specifically configured to obtain, from the first storage space based on the first identification tag of the user, the deleted background application including the first identification tag of the user, and display an application identifier of each deleted background application.

In some implementations, the restoration module is specifically configured to: obtain the restoration information of the deleted background application from the first storage space, where the deleted background application is determined based on the operation from the user; add the deleted background application to the background application list based on the obtained restoration information of the deleted background application; and remove the deleted background application from the first storage space.

According to a third aspect, an embodiment of this application provides an electronic device, including a memory, a processor, a ranging signal receiving component, and a computer program that is stored in the memory and that can be run on the processor. The processor implements the method according to the first aspect when executing the computer program.

According to a fourth aspect, an embodiment of this application provides a computer-readable storage medium. The computer-readable storage medium stores a computer program. When the computer program is executed by a processor, the method according to the first aspect is implemented.

According to a fifth aspect, an embodiment of this application provides a computer program product. When the computer program product runs on an electronic device, a terminal device is enabled to perform the method according to the first aspect.

According to a sixth aspect, an embodiment of this application provides a chip system. The chip system includes a memory and a processor, and the processor executes a computer program stored in the memory, to implement the method according to the first aspect.

According to a seventh aspect, an embodiment of this application provides a chip system. The chip system includes a processor, and the processor is coupled to the computer-readable storage medium according to the eighth aspect. The processor executes a computer program stored in the computer-readable storage medium, to implement the method according to the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a diagram of a structure of an electronic device to which a background application restoration method is applied according to an embodiment of this application;
FIG. 2A to FIG. 2C is a diagram of a software structure of an electronic device to which a background application restoration method is applied according to an embodiment of this application;
FIG. 3 is a schematic flowchart of a background application restoration method according to an embodiment of this application;
FIG. 4 is a diagram of a structure of a system to which a background application restoration method is applied according to an embodiment of this application;
FIG. 5 is a diagram of an application interface to which a background application restoration method is applied according to an embodiment of this application;
FIG. 6 is a diagram of an application interface to which another background application restoration method is applied according to an embodiment of this application;
FIG. 7 is a diagram of an application interface to which another background application restoration method is applied according to an embodiment of this application;
FIG. 8 is a diagram of an application interface to which another background application restoration method is applied according to an embodiment of this application;
FIG. 9 is a diagram of a structure of a system to which another background application restoration method is applied according to an embodiment of this application;
FIG. 10 is a schematic flowchart of another background application restoration method according to an embodiment of this application;
FIG. 11 is a block diagram of a structure of a ranging apparatus used in an electronic device according to an embodiment of this application; and
FIG. 12 is a block diagram of a structure of an electronic device according to an embodiment of this application.

### DESCRIPTION OF EMBODIMENTS

In the following description, for illustration instead of limitation, specific details such as a specific system structure and technology are provided, so as to thoroughly understand embodiments of this application. However, a person skilled in the art should understand that this application may also be implemented in other embodiments without these specific details. In other cases, detailed descriptions of a well-known system, apparatus, circuit, and method are omitted, so as not to obscure the description of this application with unnecessary detail.

It should be understood that the term "include" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context.

In addition, in the description of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

When a user uses an intelligent device, it is very likely that a background application is accidentally deleted. In this case, a locking function may be provided for a background application display interface to lock a background application that needs to be retained. The locked background application cannot be deleted, so that a function of preventing accidental deletion is implemented.

However, in this manner, a locking operation needs to be performed on the background application display interface in advance, and the operation is complex. In addition, when an unlocked background application is accidentally deleted, it cannot be remedied.

Therefore, this application provides a background application restoration method, including: in response to a restore operation from a user, obtaining a first identification tag of the user; obtaining, based on the first identification tag of the user, background applications deleted by the user; and displaying the background applications; and determining at least one background application from the displayed background applications and restoring the at least one background application in response to the operation from the user.

In this application, the first identification tag of the user is obtained in response to the restore operation from the user. Then, the background applications deleted by the user are obtained based on the first identification tag of the user. In addition, the at least one background application is determined from the displayed background applications and restored in response to the operation from the user. In this way, the background application deleted by the user is restored, so that when accidentally deleting a background application, the user can conveniently and quickly restore the accidentally deleted background application by using the operation, thereby resolving a problem that the background application is accidentally deleted.

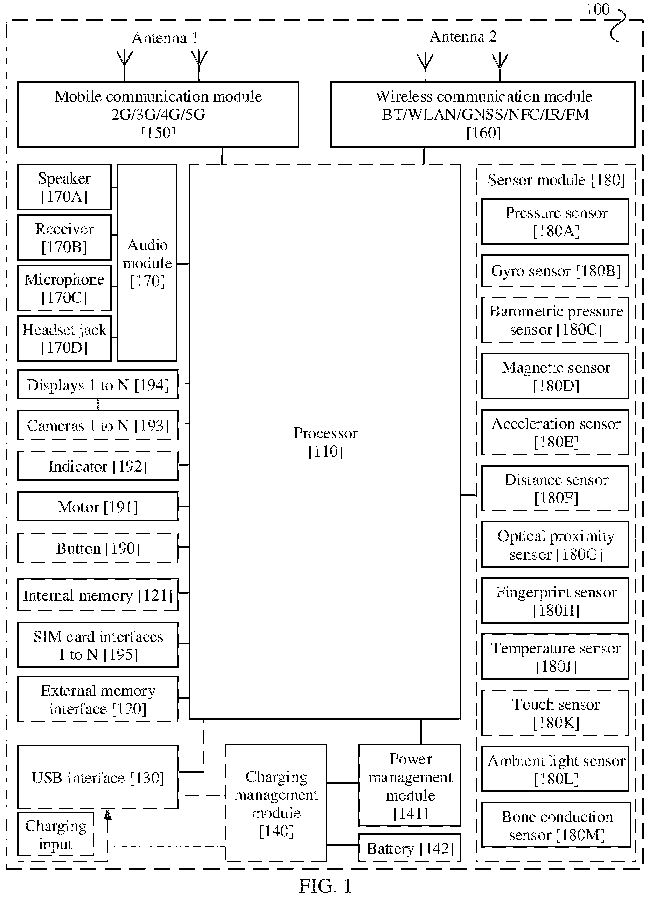

FIG. 1 is a diagram of a structure of an electronic device to which a background application restoration method is applied according to an embodiment of this application.

In FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

For example, when the electronic device 100 is a mobile phone, a tablet computer, or a large-screen device, the electronic device 100 may include all components shown in the figure, or may include only some components shown in the figure.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

The memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor 110 may directly call the instructions or the data from the memory, to avoid repeated access and reduce waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communication module 160 through the I2S interface.

The PCM interface may also be used to perform audio communication, and sample, quantize, and code an analog signal. In some embodiments, the audio module 170 and the wireless communication module 160 may be coupled through a PCM bus interface.

In some embodiments, the audio module 170 may alternatively transmit the audio signal to the wireless communication module 160 through the PCM interface. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication.

In some embodiments, the UART interface is generally used to connect the processor 110 and the wireless communication module 160. For example, the processor 110 communicates with a Bluetooth module in the wireless communication module 160 through the UART interface, to implement a Bluetooth function.

In some embodiments, the audio module 170 may transmit an audio signal to the wireless communication module 160 through the UART interface, to implement a function of playing music through a Bluetooth headset.

The MIPI may be configured to connect the processor 110 to peripheral devices such as the display 194 and the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured for data transmission between the electronic device 100 and a peripheral device, or may be configured to connect to a headset for playing audio through the headset. The interface may further be configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from an interface connection manner in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130.

In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives inputs or an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance).

In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may alternatively be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1.

In some embodiments, at least some functional modules of the mobile communication module 150 may be disposed in the processor 110.

In some embodiments, the at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or video through the display 194.

In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes the wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology.

The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. For example, in a teaching video and a user action picture video in this embodiment of this application, the display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like.

In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. The photosensitive element of the camera converts an optical signal into an electrical signal, and transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. A focal segment of the lens may indicate a framing range of the camera. A smaller focal segment of the lens indicates a larger framing range of the lens. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV

In this application, the electronic device 100 may include a camera 193 with two or more focal segments.

The digital signal processor is configured to process a digital signal, and may process another digital signal in addition to the digital image signal. For example, when the electronic device 100 selects a frequency, the digital signal processor is configured to perform fourier transformation and the like on frequency energy.

The video codec is configured to compress or decompress a digital video. The electronic device 100 may support one or more types of video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 100, such as image recognition, facial recognition, speech recognition, and text understanding.

In this embodiment of this application, the NPU or another processor may be configured to perform operations such as analysis and processing on an image in a video stored in the electronic device 100.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 executes various functional applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function). The data storage area may store data (such as audio data and an address book) created during use of the electronic device 100.

In addition, the internal memory 121 may include a high-speed random access memory, and may further include a non-volatile memory, for example, at least one magnetic disk storage device, a flash memory, or a universal flash storage (universal flash storage, UFS).

The electronic device 100 may implement an audio function through the audio module 170, the speaker 170A, the receiver 170B, the microphone 170C, the headset jack 170D, the application processor, and the like.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used for listening to music or answering a hands-free call by using the speaker 170A. For example, the speaker may play a comparison analysis result provided in this embodiment of this application.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mic" or a "sound conducting device", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. When ranging is performed by using an ultrasonic wave, the selected microphone 170C needs to be capable of recording an ultrasonic audio signal.

In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal.

In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects intensity of the touch operation through the pressure sensor 180A. The electronic device 100 may alternatively calculate a touch position based on a detection signal of the pressure sensor 180A.

In some embodiments, touch operations that are performed in a same touch position but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to the first pressure threshold is performed on the messaging application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may further be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a leather case of a flip cover through the magnetic sensor 180D. In some embodiments, when the electronic device 100 is a clamshell phone, the electronic device 100 may detect opening and closing of a flip cover through the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is static, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance by using an ultrasonic wave, an infrared ray, or a laser. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is the object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from abnormally shutting down due to the low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touch screen, which is also referred to as a "touchscreen". The touch sensor 180K is configured to detect a touch operation performed on or near the touch sensor. The touch sensor may transfer the detected touch operation to the application processor to determine a type of a touch event. The display 194 may provide a visual output related to the touch operation. In some other embodiments, the touch sensor 180K may alternatively be disposed on a surface of the electronic device 100, and a location of the touch sensor 180K is different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively be in contact with a body pulse to receive a blood pressure beating signal.

In some embodiments, the bone conduction sensor 180M may alternatively be disposed in a headset, to form a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photo taking and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may alternatively be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. Types of the plurality of cards may be the same or may be different. The SIM card interface 195 may alternatively be compatible with different types of SIM cards. The SIM card interface 195 may alternatively be compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

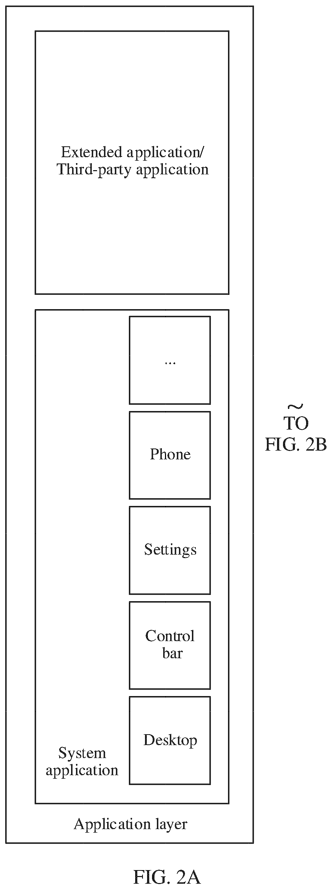

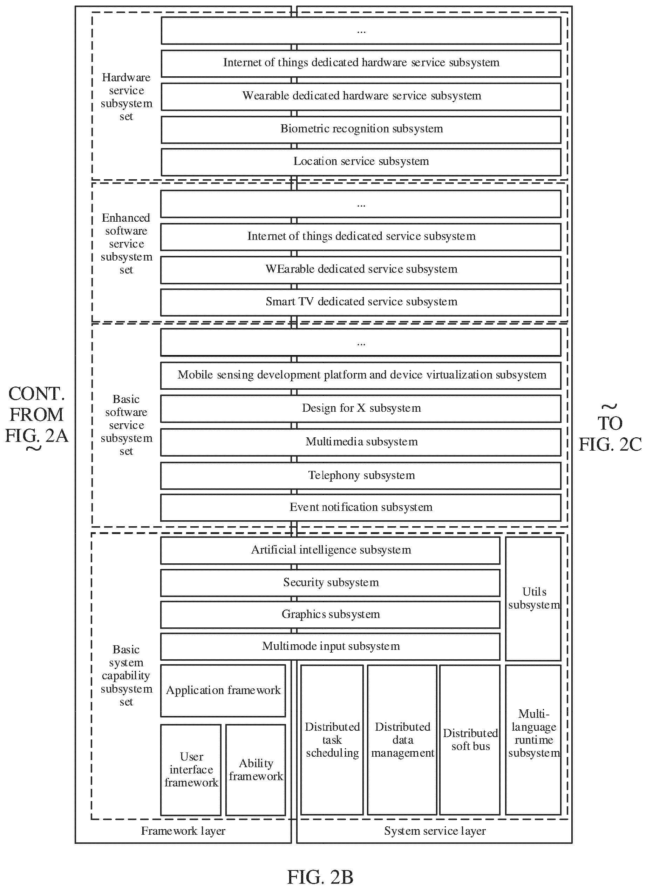

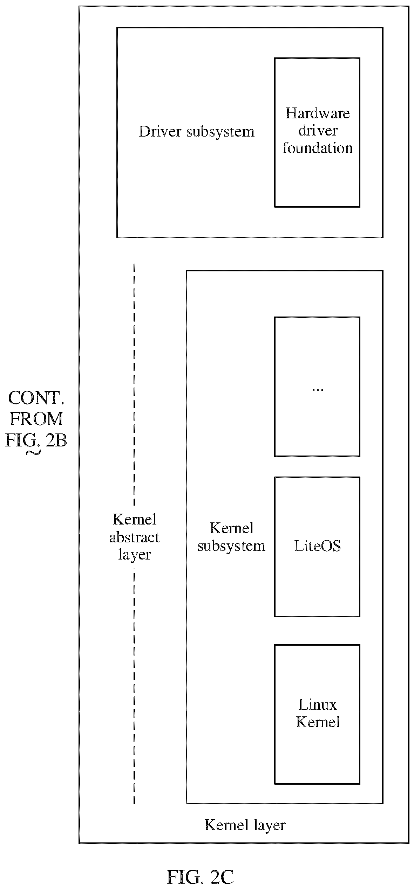

FIG. 2A to FIG. 2C is a diagram of a software structure of an electronic device to which a background application restoration method is applied according to an embodiment of this application.

An operating system in the electronic device may be an Android (Android) system, a Microsoft window (Windows) system, an Apple mobile operating system (iOS), a HarmonyOS (Harmony OS) system, or the like. An example in which the operating system of the electronic device is the HarmonyOS system is used for description herein.

In some embodiments, the HarmonyOS system may be divided into four layers, including a kernel layer, a system service layer, a framework layer, and an application layer. The layers communicate with each other through a software interface.

As shown in FIG. 2A to FIG. 2C, the kernel layer includes a kernel abstract layer (Kernel Abstract Layer, KAL) and a driver subsystem. The KAL includes a plurality of kernels, such as a Linux kernel and a LiteOS kernel of a lightweight internet of things system. The driver subsystem may include a hardware driver foundation (Hardware Driver Foundation, HDF). The hardware driver foundation can provide a unified peripheral access capability and driver development and a management framework. A multi-core kernel layer may select a corresponding kernel for processing based on a system requirement.

The system service layer is a set of core capabilities of the HarmonyOS system. The system service layer provides a service for applications through the framework layer. The layer may include:
a basic system capability subsystem set that implements distributed application running, scheduling, and migration across HarmonyOS devices. The subsystem set may include subsystems such as a distributed soft bus subsystem, a distributed data management subsystem, a distributed task scheduling subsystem, a multi-language runtime subsystem, a Utils subsystem, a multimode input subsystem, a graphics subsystem, a security subsystem, an artificial intelligence (Artificial Intelligence, AI) subsystem, and an application framework subsystem. The multi-language runtime provides C or C++ or JavaScript (JS) multi-language runtimes and basic system class libraries. It also provides the runtime required for static Java programs using compilers. (That is, the static Java program is a part of an application or a framework layer that is developed using Java);
a basic software service subsystem set that provides the HarmonyOS system with common software services, and may include subsystems such as an event notification subsystem, a telephony subsystem, a multimedia subsystem, a design for X (Design For X, DFX) subsystem, and an MSDP&DV subsystem;
an enhanced software service subsystem set that provides the HarmonyOS system with differentiated enhanced software services, and may include a smart TV dedicated service subsystem, a wearable dedicated service subsystem, and an internet of things (Internet of Things, IoT) dedicated service subsystem; and
a hardware service subsystem set that provides the HarmonyOS system with hardware services, and may include subsystems such as a location service subsystem, a biometric recognition subsystem, a wearable dedicated hardware service subsystem, and an IoT dedicated hardware service subsystem.

The framework layer provides HarmonyOS application development with an application framework and an ability (Ability) framework specific to a plurality of languages such as Java, C, C++, and JS; and also provides two types of user interface (User Interface, UI) frameworks (including a Java UI framework for a Java language and a JS UI framework for a JS language), and a multi-language framework application programming interface (Application Programming Interface, API) for various software and hardware services. The APIs available for different HarmonyOS devices vary based on component-based tailoring of the system.

The application layer includes system applications and third-party non-system applications. The system applications may include default applications installed on the electronic device, for example, Desktop, Control bar, Settings, and Phone. An extended application may be an unnecessary application developed and designed by a manufacturer of the electronic device, for example, applications like an electronic device manager, a device change migration, notes, or weather. The third-party non-system applications can be developed by other vendors, but can run applications in the HarmonyOS system, such as games, navigation, social networking, or shopping.

An application of the HarmonyOS system includes one or more feature abilities (Feature Abilities, FAs) or particle abilities (Particle Abilities, PAs). The FA has a user interface (UI) to provide a capability of interacting with a user. However, the PA does not have a UI but provides a background task running capability and unified data access abstraction. The PA mainly provides support for the FA, for example, serve as a background service to provide a computing capability or serve as a data warehouse to provide a data access capability. Applications developed based on the FA or PA can implement specific service functions and support cross-device scheduling and distribution, providing consistent and efficient application experience for the user.

A plurality of electronic devices running the HarmonyOS system can implement hardware mutual assistance and resource sharing through the distributed soft bus, distributed device virtualization, distributed data management, and distributed task scheduling.

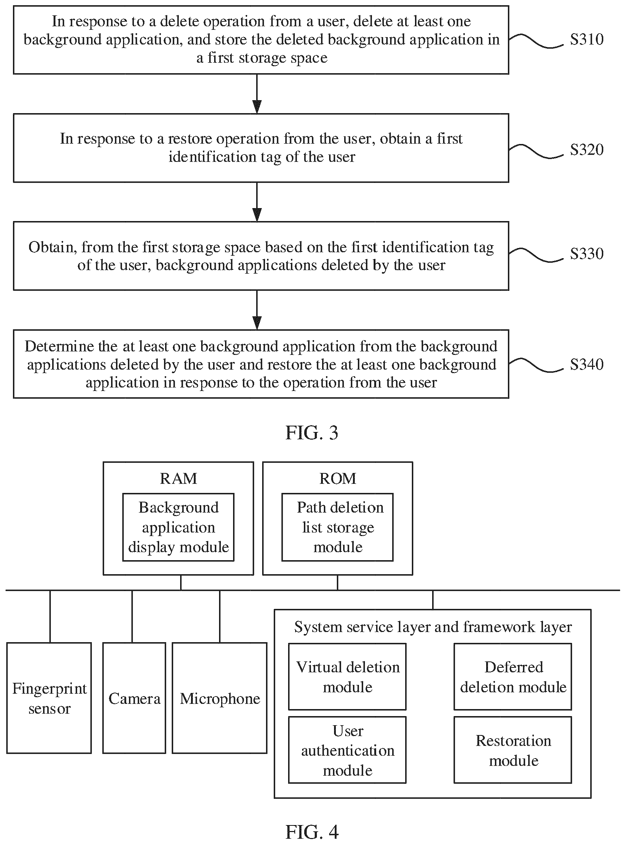

FIG. 3 is a schematic flowchart of a background application restoration method according to an embodiment of this application. By way of example, and not limitation, the method may be applied to the foregoing electronic device 100.

Refer to FIG. 3. The background application restoration method includes the following steps.

S310: In response to a delete operation from a user, delete at least one background application, and store the deleted background application in a first storage space.

In some implementations, the delete operation from the user may be an independent operation, or may be a combination of a plurality of operations.

When the delete operation is the independent operation, the delete operation may be a voice control instruction received by the electronic device, a gesture operation, an operation on a physical button, or the like. For example, when a microphone of the electronic device receives a voice instruction "clear background applications", the electronic device may delete all the background applications. Alternatively, when a touch panel of the electronic device receives a gesture operation for indicating to clear background applications, all the background applications may be deleted. Alternatively, if a physical button for clearing background applications is disposed, when the physical button receives a signal sent through a pressing operation from the user, all the background applications may be deleted.

When the delete operation is the combination of the plurality of operations, the delete operation may be a combination of a plurality of control operations on a display interface of the electronic device. For example, after the electronic device receives a sliding operation of sliding upward from a bottom screen edge, the display interface of the electronic device may display a plurality of running background applications in a background application list. The interface may include preview interfaces of a plurality of background applications, and a deletion mark for indicating to delete each background application is set on a preview interface of the background application. The interface may further include a clear mark for indicating to delete all background applications. The background application list includes at least one running background application.

Then, after receiving a sliding operation for indicating to delete one or more background applications, the electronic device deletes the corresponding background application. The sliding operation for indicating to delete the one or more background applications includes: tapping a deletion mark corresponding to the background application on a background application interface, tapping a clear mark on a background application screen, or tapping a preview interface of the background application, and dragging the preview interface over a distance in a preset direction, to indicate to delete the background application.

In some implementations, when the at least one background application is deleted and the deleted background application is stored in the first storage space, the deleted background application may be removed from the background application list. Then, the deleted background application, restoration information of the deleted background application, and a first identification tag of the user are bound, and the bound deleted background application, restoration information of the deleted background application, and first identification tag of the user are stored in the first storage space.

FIG. 4 is a diagram of a structure of a system to which the background application restoration method is applied according to an embodiment of this application.

For example, refer to FIG. 4. The system structure includes a background application display module, a virtual deletion module, and a path deletion list storage module. The background application display module may be a service running in a random access memory (Random Access Memory, RAM), and is configured to: when detecting an operation for indicating to display a running background application, obtain the running background application from the RAM, and display the running background application on the interface of the electronic device.

The virtual deletion module may be a service module at a system service layer and a framework layer. The virtual deletion module is configured to: identify the first identification tag of the user who currently deletes the background application; and bind the deleted background application, the restoration information of the deleted background application, and the first identification tag of the user, and deliver the bound deleted background application, restoration information of the deleted background application, and first identification tag of the user to the path deletion list storage module. The path deletion list storage module is configured to store the bound deleted background application, restoration information of the deleted background application, and first identification tag of the user in the first storage space in a read-only memory (Read-Only Memory, ROM). The deleted background application includes running data of the background application, for example, may include process data, a type of an invoked service, and a storage location of cached data of the background application. The restoration information of the deleted background application may include a time at which the background application is deleted, interface information of the application when the background application is deleted, and the like. The first identification tag of the user may be a number, text information, a unique character string, or the like. The first identification tag of the user indicates an identity of the user. For example, the identity of the user includes an owner, a plurality of family members, or a visitor. The first identification tag of the user may be determined based on a biometric feature such as a voiceprint feature, a facial feature, or a fingerprint feature of the user, or may be information that can be used to identify the user, such as a password or a drawn graph.

For example, biometric features of a plurality of users with different identities (for example, the owner and the plurality of family members) may be pre-recorded in the electronic device. When the electronic device is unlocked based on a corresponding biometric feature, it may be determined that a current user is an identity of the user corresponding to the biometric feature, and a first identification tag of the user may be determined.

It should be noted that each user of the electronic device may delete a background application. To distinguish background applications deleted by different users, the path deletion list storage module may store the background applications deleted by the users with different identification tags in different storage spaces. For example, when the path deletion list storage module receives the first identification tag, the deleted background application, and the restoration information of the deleted background application, it is determined that the first identification tag corresponds to the owner, and the background application is deleted by the owner. In this case, the first identification tag, the deleted background application, and the restoration information of the deleted background application may be stored in a storage space corresponding to the owner in the first storage space.

When the path deletion list storage module receives the first identification tag, the deleted background application, and the restoration information of the deleted background application, it is determined that the first identification tag corresponds to a family member A, and the background application is deleted by the family member A. In this case, the first identification tag, the deleted background application, and the restoration information of the deleted background application may be stored in a storage space corresponding to the family member A in the first storage space.

In some implementations, refer to FIG. 4. In this embodiment, a deferred deletion module is further included. Similar to the virtual deletion module, the deferred deletion module may be a service module at the system service layer and the framework layer. The deferred deletion module is configured to perform timing on the deleted background application stored in the first storage space. Each deleted background application corresponds to one preset duration. The preset duration is clearing duration of the background application. After storage duration of the deleted background application in the first storage space reaches clearing duration corresponding to the deleted background application, the deferred deletion module clears the deleted background application. To be specific, the deferred deletion module deletes the deleted background application and the corresponding restoration information from the first storage space.

S320: In response to a restore operation from the user, obtain the first identification tag of the user.

In some implementations, the restore operation from the user may be an independent operation, or may be a combination of a plurality of operations.

When the restore operation is the independent operation, the restore operation may be a voice control instruction received by the electronic device, a gesture operation, an operation on a physical button, or the like. For example, refer to FIG. 4. When receiving a voice instruction "restoring a background application", the microphone of the electronic device may obtain, by using a user authentication module, a first identification tag of a corresponding user based on a voiceprint feature of the received voice instruction. The user authentication module may be a service module at the system service layer and the framework layer, and is configured to identify the user who initiates the restore operation.

Alternatively, when the touch panel of the electronic device receives a gesture operation of indicating to restore a background application, a fingerprint feature or a facial feature of a user may be collected by using the user authentication module, to identify a first identification tag of the user.

When the restore operation is the combination of the plurality of operations, the restore operation may be a combination of a plurality of control operations on the display interface of the electronic device. For example, after the electronic device receives a sliding operation of sliding upward from the bottom screen edge, the display interface of the electronic device may display a plurality of running background applications. The interface shows content mentioned in the example in S310, and may further include a restore button for indicating to restore a background application.

Then, when receiving an operation of tapping the restore button for indicating to restore the background application, the electronic device may collect a voiceprint feature, a fingerprint feature, or a facial feature of a user by using the user authentication module, to identify the user who initiates the restore operation, and obtain a first identification tag of the user.

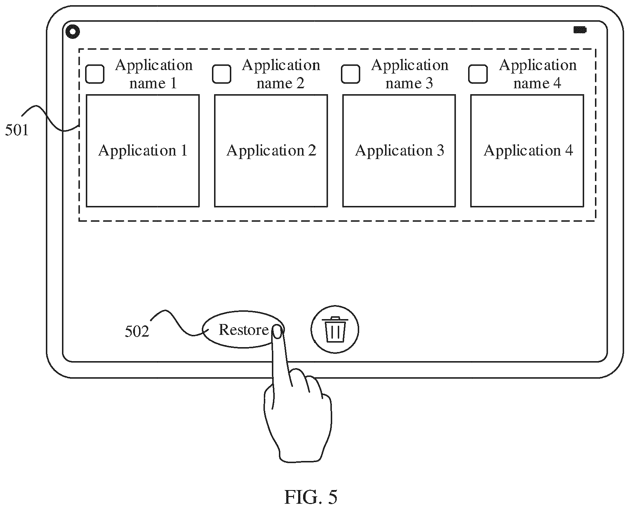

FIG. 5 is a diagram of an application interface to which the background application restoration method is applied according to an embodiment of this application.

FIG. 5 shows a plurality of running background applications 501 and a restore button 502. When a tap operation is received in an area in which the restore button 502 is displayed, the electronic device may determine that the restore operation is received. The electronic device may collect, through a fingerprint sensor, a camera, or the microphone, a biometric feature of the user who initiates the restore operation, and obtain the first identification tag of the user based on the biometric feature of the user.

S330: Obtain, from the first storage space based on the first identification tag of the user, the background applications deleted by the user.

In some implementations, the first storage space may store a plurality of background applications deleted by the user, and each deleted background application corresponds to one first identification tag. In this case, only the deleted background application including the first identification tag of the user may be obtained. For example, if the first storage space stores background applications (including first identification tags of the owner) deleted by the owner and a background application (including a first identification tag of the family member A) deleted by the family member A, when the first identification tag of the user indicates that the user is the owner, all the background applications deleted by the owner are obtained based on the first identification tags corresponding to the owner.

S340: Determine the at least one background application from the background applications deleted by the user and restore the at least one background application in response to the operation from the user.

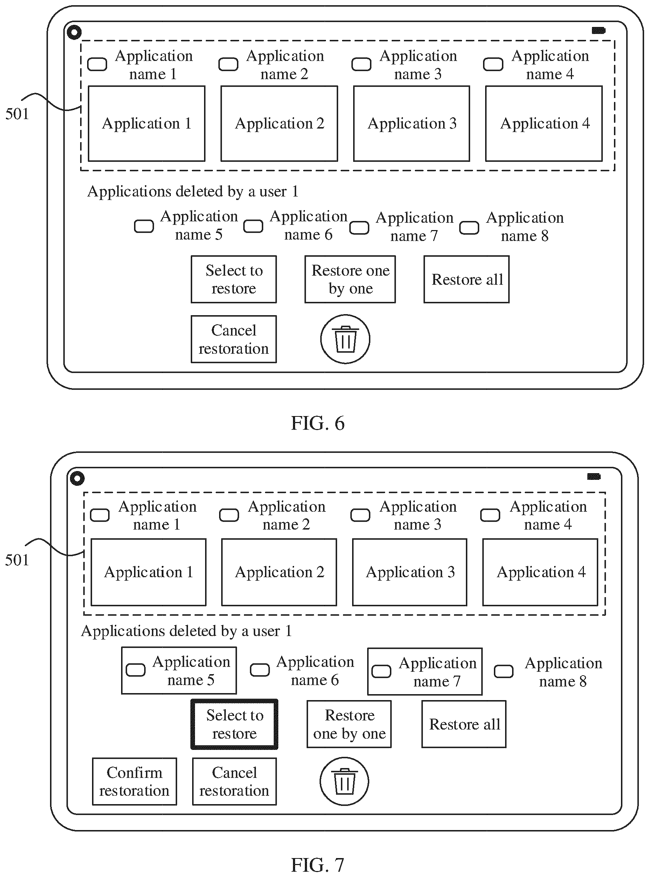

FIG. 6 is a diagram of an application interface to which another background application restoration method is applied according to an embodiment of this application. FIG. 7 is a diagram of an application interface to which another background application restoration method is applied according to an embodiment of this application.

In some implementations, after a background application deleted by a user is obtained from a first storage space, an application name and an icon of the background application deleted by the user may be displayed on an interface. Refer to FIG. 6. An owner is a user 1. In FIG. 6, names "application name 5", "application name 6", "application name 7", and "application name 8" of four background applications deleted by the owner are displayed in a time sequence of deletion. In addition, four restoration options are displayed: "select to restore", "restore one by one", "restore all", and "cancel restoration".

In this case, an operation of the user may be a selection operation. For example, the selection operation may be a tap operation performed on an area displaying "select to restore", "restore one by one", or "restore all".

For example, when the selection operation of the user is a tap operation performed on an area displaying "select to restore", refer to FIG. 7. The area of "select to restore" may be highlighted to prompt the user to enter an interface of "select to restore". In addition, a tap operation performed by the user on areas displaying the "application name 5", the "application name 6", the "application name 7", and the "application name 8" may be received, to highlight a selected application name, so as to determine a background application that the user needs to restore. In FIG. 7, the "application name 5" and the "application name 7" are selected as examples. When it is determined that the user selects a background application that needs to be restored, a "confirm restoration" button may be displayed, to prompt the user to confirm again whether to restore the background application. After a tap operation is received in an area displaying "confirm restoration", it is confirmed that the user needs to restore background applications corresponding to the "application name 5" and the "application name 7".

Then, refer to FIG. 4. A restoration module obtains, from the first storage space, restoration information of the background applications corresponding to the "application name 5" and the "application name 7", adds, based on the restoration information corresponding to the "application name 5" and the "application name 7", the applications corresponding to the "application name 5" and the "application name 7" to a background application list, and then removes data corresponding to the "application name 5" and the "application name 7" from the first storage space.

In some implementations, still refer to FIG. 6. When the selection operation of the user is a tap operation performed on an area displaying "restore one by one", each time a tap operation is performed, a deleted background application whose deletion time is closest to current time may be restored. For example, if the current time is 18:00, an application 5 is deleted at 17:00, an application 6 is deleted at 17:12, an application 7 is deleted at 17:31, and an application 8 is deleted at 17:58. When a tap operation is received in the area displaying "restore one by one", a background application corresponding to the application 8 is restored. When a tap operation is received again in the area displaying "restore one by one", a background application corresponding to the application 7 is restored. A restoration manner is similar to that in the foregoing example, and details are not described herein again. The rest may be deduced by analogy until all deleted background applications are restored, or an operation of terminating restoration is received (for example, a tap operation is received in an area displaying "cancel restoration").

In some other implementations, still refer to FIG. 6. When the selection operation of the user is a tap operation performed on an area displaying "restore all", all the background applications corresponding to the "application name 5", the "application name 6", the "application name 7", and the "application name 8" are restored. A restoration manner is similar to that in the foregoing example, and details are not described herein again.

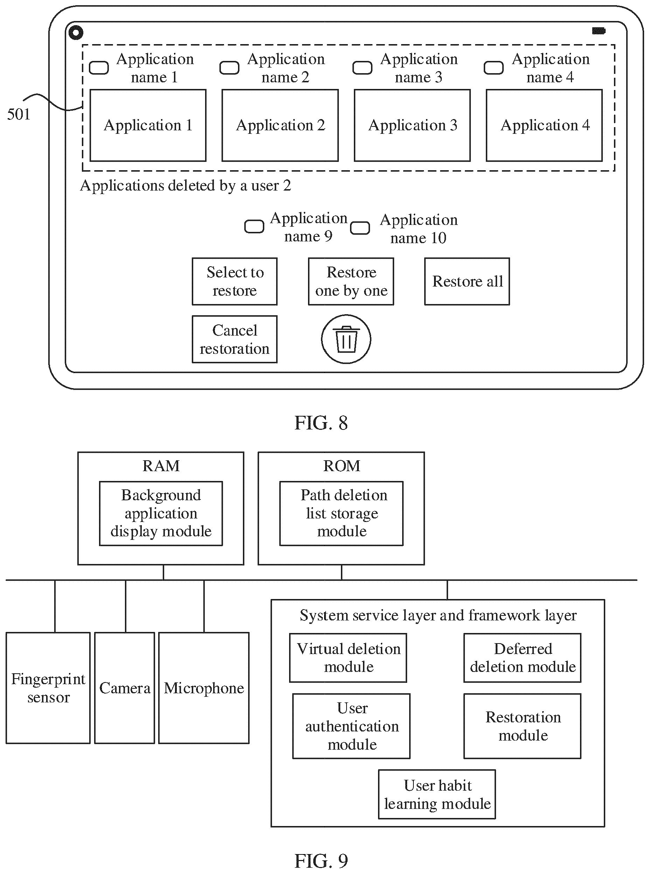

FIG. 8 is a diagram of an application interface to which another background application restoration method is applied according to an embodiment of this application.

Refer to FIG. 8. A family member A is a user 2. In FIG. 8, names "application name 9" and "application name 10" of two background applications deleted by the family member A are displayed in a time sequence of deletion. In addition, four restoration options are displayed: "select to restore", "restore one by one", "restore all", and "cancel restoration". A manner in which the user 2 restores a background application is similar to a manner in which the user 1 restores a background application, and details are not described herein again.

In this application, a user obtains a first identification identifier of the user by initiating a restore operation, and a background application deleted by the user is obtained based on the first identification identifier of the user. This can prevent other users from restoring background applications that are not deleted by themselves and prevents other users from obtaining private data by restoring the deleted background applications. This can better protect privacy of each user.

FIG. 9 is a diagram of a structure of a system to which another background application restoration method is applied according to an embodiment of this application.

In some implementations, refer to FIG. 9. This application further provides a user habit learning module. The user habit learning module is also a service module at a system service layer and a framework layer, and is configured to modify preset duration (namely, clearing duration) of each background application in a deferred deletion module based on a restoration habit of a user, to learn the habit of restoring the background application by the user and provide a more personalized service.

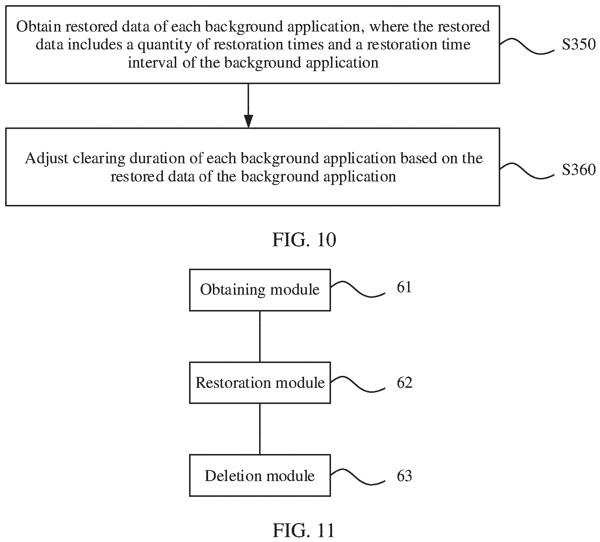

FIG. 10 is a schematic flowchart of another background application restoration method according to an embodiment of this application.

Refer to FIG. 10. Learning a habit of restoring a background application by a user includes:
S350: Obtain restored data of each background application, where the restored data includes a quantity of restoration times and a restoration time interval of the background application.

When different users delete a same background application, clearing duration of the background application may be different. A quantity of restoration times of the background application needs to be counted based on the different users. For example, in a week, a user 1 (an owner) restores an application 1 for 20 times (a quantity of restoration times), and restoration is usually performed within 10 minutes (a restoration time interval) after the application 1 is deleted. A user 2 restores the application 1 for five times, and restoration is usually performed within 30 minutes after the application 1 is deleted.

S360: Adjust clearing duration of each background application based on the restored data of the background application.

In some implementations, importance of each background application to different users is different. Therefore, when the restored data of each background application is obtained, differentiation needs to be performed based on a first identification identifier of a user.

For example, for the user 1 in the foregoing example, the quantity of times of restoring the application 1 in the week is the largest, and the restoration time interval is the shortest. In this case, it may be determined, based on restored data of the application 1, that importance of the application 1 to the user 1 increases, in other words, clearing duration after the user 1 deletes the application 1 may be prolonged. For example, the clearing duration after the user 1 deletes the application 1 is 15 minutes. The clearing duration may be adjusted to 30 minutes based on a change in the importance of the application 1 to the user 1.

For the user 2 in the foregoing example, the quantity of times of restoring the application 1 in the week is the smallest, and the restoration time interval is the longest. In this case, it may be determined, based on the restored data of the application 1, that importance of the application 1 to the user 2 decreases, in other words, clearing duration after the user 2 deletes the application 1 may be shortened. For example, the clearing duration after the user 2 deletes the application 1 is 15 minutes. The clearing duration may be adjusted to 10 minutes based on a change in the importance of the application 1 to the user 2.

It should be understood that sequence numbers of the steps in the foregoing embodiments do not mean execution sequences. The execution sequences of the processes should be determined based on functions and internal logic of the processes, and should not be construed as any limitation on implementation processes of embodiments of this application.

Corresponding to the background application restoration method applied to the electronic device provided in the foregoing embodiment, FIG. 11 is a block diagram of a structure of a ranging apparatus used in an electronic device according to an embodiment of this application. For ease of description, only a part related to this embodiment of this application is shown.

Refer to FIG. 11. The background application restoration apparatus includes:
an obtaining module 61, configured to: in response to a restore operation from a user, obtain a first identification tag of the user, where
the obtaining module 61 is further configured to: obtain, based on the first identification tag of the user, background applications deleted by the user; and display the background applications; and
a restoration module 62, configured to: select at least one background application from the displayed background applications and restore the at least one background application in response to the operation from the user.

In some implementations, the apparatus further includes a deletion module 63, configured to: in response to a delete operation from the user, delete the at least one background application, and store the deleted background application in a first storage space.

In some implementations, the deletion module 63 is specifically configured to: remove the deleted background application from a background application list, where the background application list includes at least one running background application; and bind the deleted background application, restoration information of the deleted background application, and the first identification tag of the user, and store the bound deleted background application, restoration information of the deleted background application, and first identification tag of the user in the first storage space.

In some implementations, the deletion module 63 is further configured to: after storage duration of the deleted background application in the first storage space reaches preset duration, clear the deleted background application from the first storage space.

In some implementations, the preset duration is determined based on a quantity of restoration times that the user restores the deleted background application and a restoration time interval.

In some implementations, the obtaining module 61 is specifically configured to obtain, from the first storage space based on the first identification tag of the user, the deleted background application including the first identification tag of the user, and display an application identifier of each deleted background application.

In some implementations, the restoration module 62 is specifically configured to: obtain the restoration information of the deleted background application from the first storage space, where the deleted background application is determined based on the operation from the user; add the deleted background application to the background application list based on the obtained restoration information of the deleted background application; and remove the deleted background application from the first storage space.

It should be noted that the information exchange, execution process, and other content between the foregoing modules are based on the same concept as the method embodiment of this application. For the specific functions and technical effects, refer to the method embodiment section for details, which are not described herein again.

A person skilled in the art may clearly understand that, for the purpose of convenient and brief description, division into the foregoing functional units or modules is merely used as an example for description. In actual application, the foregoing functions may be allocated to different functional units or modules for implementation based on a requirement. In other words, an inner structure of the apparatus is divided into different functional units or modules, to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the method embodiments. Details are not described herein again.

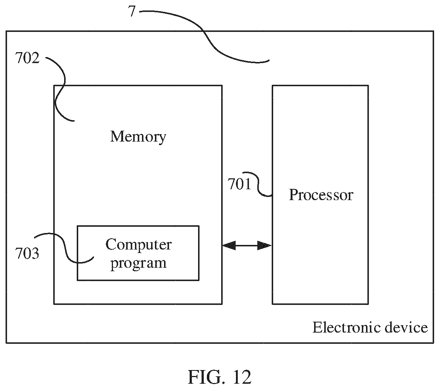

FIG. 12 is a block diagram of a structure of an electronic device according to an embodiment of this application. As shown in FIG. 12, an electronic device 7 in this embodiment includes:
at least one processor 701 (only one processor is shown in FIG. 12), a memory 702, and a computer program 703 that is stored in the memory 702 and that can run on the at least one processor 701. The processor 701 implements the steps in the foregoing control method embodiment when executing the computer program 703.

The electronic device 7 may be a mobile phone, a tablet computer, an augmented reality (augmented reality, AR)/virtual reality (virtual reality, VR) device, a large-screen device, a notebook computer, a netbook, a personal digital assistant (personal digital assistant, PDA), or the like. A person skilled in the art may understand that FIG. 12 is merely an example of the electronic device 7, and does not constitute a limitation on the electronic device 7. The electronic device 7 may include more or fewer components than those shown in the figure, or combine some components, or different components. For example, the electronic device 7 may further include an input/output device and a network access device.

The processor 701 may be a central processing unit (Central Processing Unit, CPU), or the processor 701 may be another general-purpose processor, a digital signal processor (Digital Signal Processor, DSP), an application-specific integrated circuit (Application-Specific Integrated Circuit, ASIC), an SOC, a field-programmable gate array (Field-Programmable Gate Array, FPGA) or another programmable logic device, a discrete gate or transistor logic device, a discrete hardware component, or the like. The general-purpose processor may be a microprocessor, or the processor may be any conventional processor or the like.

In some embodiments, the memory 702 may be an internal storage unit of the electronic device 7, for example, a hard disk or an internal memory of the electronic device 7. In some other embodiments, the memory 702 may alternatively be an external storage device of the electronic device 7, for example, a removable hard disk, a smart media card (Smart Media Card, SMC), a secure digital (Secure Digital, SD) card, or a flash card (Flash Card) that is equipped on the electronic device 7.

Further, the memory 702 may further include both an internal storage unit and an external storage device of the electronic device 7. The memory 702 is configured to store an operating system, an application, a bootloader (BootLoader), data, another program, and the like, for example, program code of a computer program. The memory 702 may be further configured to temporarily store data that has been output or is to be output.

An embodiment of this application provides a computer-readable storage medium. The computer-readable storage medium stores a computer program. When the computer program is executed by a processor, the method applied to the electronic device is implemented.

An embodiment of this application provides a computer program product. When the computer program product runs on an electronic device, a terminal device is enabled to perform the foregoing method applied to the electronic device.

An embodiment of this application provides a chip system. The chip system includes a memory and a processor. The processor executes a computer program stored in the memory, to implement the method applied to the electronic device.

An embodiment of this application provides a chip system. The chip system includes a processor, and the processor is coupled to the computer-readable storage medium according to the eighth aspect. The processor executes a computer program stored in the computer-readable storage medium, to implement the method applied to the electronic device.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file form, an intermediate form, or the like. The computer-readable medium may include at least any entity or apparatus that can carry the computer program code to an electronic device or a second device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disc. In some jurisdictions, the computer-readable medium cannot be an electrical carrier signal or a telecommunication signal according to legislation and patent practices.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed method, apparatus, electronic device, or second device may be implemented in other manners. For example, the described apparatus embodiments are merely examples. For example, division into the modules or units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A background application restoration method, applied to an electronic device and comprising:
in response to a restore operation from a user, obtaining a first identification tag of the user;
obtaining, from a first storage space based on the first identification tag of the user, background applications deleted by the user; and
determining at least one background application from the background applications deleted by the user and restoring the at least one background application in response to the operation from the user.

2. The method according to claim 1, wherein the method further comprises:
in response to a delete operation from the user, deleting the at least one background application, and storing the deleted background application in the first storage space.

3. The method according to claim 2, wherein the deleting the at least one background application, and storing the deleted background application in the first storage space comprises:
removing the deleted background application from a background application list, wherein the background application list comprises at least one running background application; and
binding the deleted background application, restoration information of the deleted background application, and the first identification tag of the user, and storing the bound deleted background application, restoration information of the deleted background application, and first identification tag of the user in the first storage space.

4. The method according to claim 3, wherein the method further comprises:
after storage duration of the deleted background application in the first storage space reaches preset duration, clearing the deleted background application from the first storage space.

5. The method according to claim 4, wherein the preset duration is determined based on a quantity of restoration times that the user restores the deleted background application and a restoration time interval.

6. The method according to any one of claims 2 to 5, wherein the obtaining, from a first storage space based on the first identification tag of the user, background applications deleted by the user comprises:
obtaining, from the first storage space based on the first identification tag of the user, the deleted background application comprising the first identification tag of the user; and
displaying an application identifier of each deleted background application.

7. The method according to claim 6, wherein the determining at least one background application from the background applications and restoring the at least one background application in response to the operation from the user comprises:
obtaining the restoration information of the deleted background application from the first storage space, wherein the deleted background application is determined based on the operation from the user;
adding the deleted background application to the background application list based on the obtained restoration information of the deleted background application; and
removing the deleted background application from the first storage space.

8. A background application restoration apparatus, used in an electronic device and comprising:
an obtaining module, configured to: in response to a restore operation from a user, obtain a first identification tag of the user, wherein
the obtaining module is further configured to: obtain, based on the first identification tag of the user, background applications deleted by the user; and display the background applications; and
a restoration module, configured to: select at least one background application from the displayed background applications and restore the at least one background application in response to the operation from the user.

9. An electronic device, comprising a memory, a processor, and a computer program that is stored in the memory and that can be run on the processor, wherein the processor implements the method according to any one of claims 1 to 7 when executing the computer program.

10. A computer-readable storage medium, wherein the computer-readable storage medium stores a computer program, and when the computer program is executed by a processor, the method according to any one of claims 1 to 7 is implemented.
